# EUROPÄISCHE PATENTSCHRIFT

(11) **EP 1 140 585 B1**
(45) Veröffentlichungstag und Bekanntmachung des Hinweises auf die Patenterteilung: **04.01.2006**
(21) Anmeldenummer: 00963935.2
(22) Anmeldetag: 30.08.2000
(51) Int. Cl.: B60S 1/38

(54) **WISCHBLATT FÜR SCHEIBEN VON KRAFTFAHRZEUGEN**
WIPER BLADE FOR GLASS SURFACES OF MOTOR VEHICLES
RACLETTE D'ESSUIE-GLACE POUR LES VITRES DE VEHICULES AUTOMOBILES

(30) Priorität: 26.10.1999 DE 19951363
(43) Veröffentlichungstag der Anmeldung: 10.10.2001
(73) Patentinhaber: ROBERT BOSCH GMBH, 70442 Stuttgart (DE)
(72) Erfinder: KOTLARSKI, Thomas, 53474 Bad Neuenahr (DE)
(86) Internationale Anmeldenummer: PCT/DE2000/002951
(87) Internationale Veröffentlichungsnummer: WO 2001/030618

(56) Entgegenhaltungen:
- EP-A- 0 012 251
- EP-A- 0 646 507
- DE-A- 19 729 864

## Beschreibung

### Stand der Technik

Die Erfindung geht aus von einem Wischblatt nach der Gattung der Anspruchs 1. Solche Wischblätter sind mit der DE-A-197 29 864 bekannt geworden. Die brückenartig übergreifenden Bauteile sind dabei längsgeteilt und umfassen die Längskanten der Federschienen, wobei ein einwandfreier Verbund zwischen Wischleiste, Federschienen und den brückenartig übergreifenden Bauteilen dabei wesentlich von der Maßhaltigkeit und der aufwändigen Montage der brückenartigen Bauteile abhängt. In ungünstigen Fällen hängt die Wischleiste sehr lose zwischen den Federschienen, so dass keine optimale Führung der Wischleiste erfolgt.

Bei einem anderen bekannten Wischblatt (DE 2 853 487 A1) liegen die Federschienen mit ihren einander zugewandten Längskanten am Grund der jeweiligen Längsnut - also am Steg - an und werden in dieser Position durch die Außenkanten der Federschienen umgreifenden Krallen von Gestellteilen des Wischblatts fixiert. Durch diese Maßnahme wird eine gewisse Versteifung des Stegs erreicht, was die Anpassung des Wischblatts an die Scheibenkrümmung beeinträchtigen kann. Darüber hinaus kippt wegen der erwähnten Stegversteifung die Wischleiste während des Wechsels der Arbeitsrichtung des Wischblatts aus seiner einen Arbeits-Schlepplage in seine andere Arbeits-Schlepplage mit einem unerwünscht lauten Geräusch.

### Vorteile der Erfindung

Bei dem erfindungsgemäßen Wischblatt mit den kennzeichnenden Merkmalen des Anspruchs 1 können sich die Federschienen in ihren Längsnuten auch quer zu ihrer Längserstreckung verschieben, wenn sich der Steg bei einer entsprechenden Belastung verformt. Dadurch werden Stegversteifungen vermieden, eine bessere Anpassung der Wischleiste an die Scheibenkontur und durch die so erzielte Geräuschkopplung ein ruhigerer Wischbetrieb erreicht. Weil jede der beiden Federschienen zumindest mit einem Abschnitt aus seiner Längsnut ragt und sich bezogen auf eine Längs-Mittelachse der Wischleiste diese Abschnitte gegenüberliegen und zumindest an einem dieser Abschnittspaare ein die beiden Federschienen brückenartig übergreifendes Bauteil an den voneinander abgewandten Längskanten der Federschienen anliegt, ergibt sich eine einfache Wischblattmontage, weil an dem Bauteil bereits zumindest ein den Abstand gewährleistendes Sicherungsmittel angeordnet ist.

Eine praxisnahe Ausgestaltung der Erfindung sieht vor, dass die beiden Federschienen an ihren beiden Endabschnitten sowohl in Längsrichtung als auch quer zur Längsrichtung der Wischleiste aus ihren Nuten ragen, dass an diesen Endabschnitten je ein als brückenartiges Bauteil dienende Endkappe angeordnet ist und dass an der Endkappe mit den einander zugewandten Längskanten der Federschienen zusammenwirkende, beide Enden der Federschienen in der vorschriftsmäßigen Position haltende Abstandssicherungsmittel angeordnet sind.

Zur Sicherung der Federschienen in ihren Längsnuten hat die Endkappe eine auf der von der Wischlippe abgewandten Seite der Federschienen angeordnete Basisplatte, die sich mit L-förmigen, sich in Längsrichtung der Federschienen erstreckenden Ansätzen versehen ist, deren jeweils eine L-Schenkel mit der Basisplatte verbunden sind und deren jeweils andere L-Schenkel gegeneinander gerichtet sind und daß an der Basisplatte zwischen die einander zugewandten Längskanten der Federschienen eintauchende, an diesen anliegenden Abstandssicherungsmittel angeordnet sind. Dadurch ergibt sich ein zwischen den einen L-Schenkeln und den Abstandssicherungsmitteln ein zum Steg hin begrenzter Raum für die Federschienen, die sich jedoch in diesem Raum sowohl in Längsrichtung als quer zu ihrer Längserstreckung verschieben können.

Eine besonders einfache Lösung für die Anordnung der Abstandssicherungsmittel ergibt sich, wenn diese durch einen an der Basisplatte gehaltenen Zapfen gebildet sind.

Wenn die Endkappe aus einem federelastischen Material gefertigt ist und der Zapfen an einer gegen eine Rückstellkraft aus einer Betriebsstellung in eine Montageposition auslenkbaren Zunge der Endkappe angeordnet ist, ergibt sich sowohl eine einfache Montage als auch eine einfach Demontage des Wischblatts.

Gemäß einer anderen Ausführungsform der Erfindung ist die Endkappe mit einer gegen die Längs-Endkanten der Federschienen gerichteten Wand versehen, an der in Längsrichtung der Federschienen zwischen diese eintauchende Abstandssicherungsmittel angeordnet sind. Diese Ausgestaltung der Erfindung ermöglicht eine automatische Montage der in Längsrichtung auf die Federschienen aufschiebbaren Endkappen, weil mit dem Aufbringen dieser Endkappen gleichzeitig auch die Abstandssicherungsmittel in ihre vorschriftsmäßige Position gelangen.

Wenn diese Endkappe aus einem federelastischen Material gefertigt ist und die Abstandssicherungsmittel durch zwei gegen Federkraft auslenkbare, fingerartige Ansätze der Wand gebildet sind, die in Betriebsstellung der Endkappe gespannt an einer der beiden einander zugewandten Längskanten der Federschienen anliegen, wird gleichzeitig ein Ausgleich der mit vertretbarem Aufwand unvermeidbaren Fertigungstoleranzen erreicht.

Gemäß einer anderen Ausführungsform der Erfindung ist das brückenartige Bauteil als eine im Mittelabschnitt des Wischblatts auf der von der Wischlippe abgewandten Seite der Federschienen angeordnete Anschlußvorrichtung für einen Wischerarm ausgebildet, die mit krallenartig die äußeren Längskanten der Federschienen umgreifenden Ansätzen versehen ist wobei die Abstandssicherungsmittel durch an der Anschlußvorrichtung angeordnete, in wenigstens eine Ausnehmung der jeweiligen Federschienen greifenden Mittel gebildet sind. Diese Ausgestaltung mag zwar für sich alleine anwendbar sein doch ist sie mit Vorteil auch mit den schon erwähnten Ausführungsformen der Erfindung - Verwendung der entsprechend ausgebildeten Endkappen - anwendbar.

Zweckmäßig sind bei dieser anderen Ausführungsform die Abstandssicherungsmittel durch an der Anschlußvorrichtung gehaltene, separate Bauelemente gebildet, welche die Federschienen in dort vorgesehenen Ausnehmungen durchdringen.

Zur Sicherung der Endkappen an den Endabschnitten der Federschienen ist an jedem Endabschnitt jeder Federschiene an deren von einander abgewandten Längskanten eine zu ihrem anderen Endabschnitt weisende Schulter angeordnet, der eine mit dieser zusammenwirkende Gegenschulter der Endkappe zugeordnet ist. Bei montiertem Wischblatt wirken Schulter und Gegenschulter so zusammen, daß die Endkappen unverlierbar am Wischblatt gehalten sind. Da die Positionierung der Abstandssicherungsmittel nach dem Erreichen der vorschriftsmäßigen Position der Endkappen bewerkstelligt wird ergeben sich keine Probleme beim Montieren der Endkappen.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

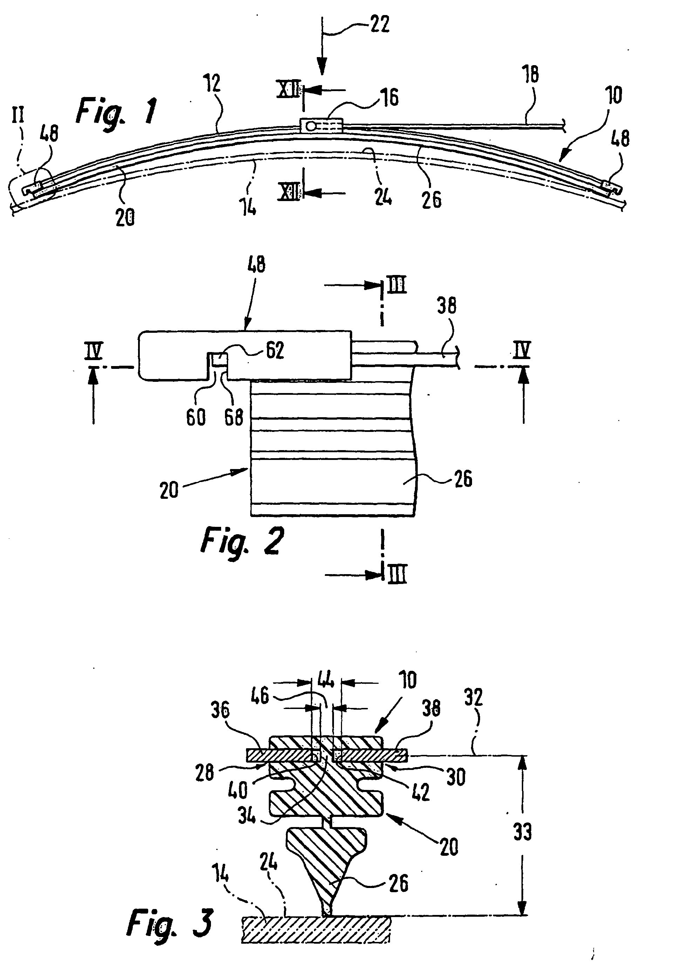

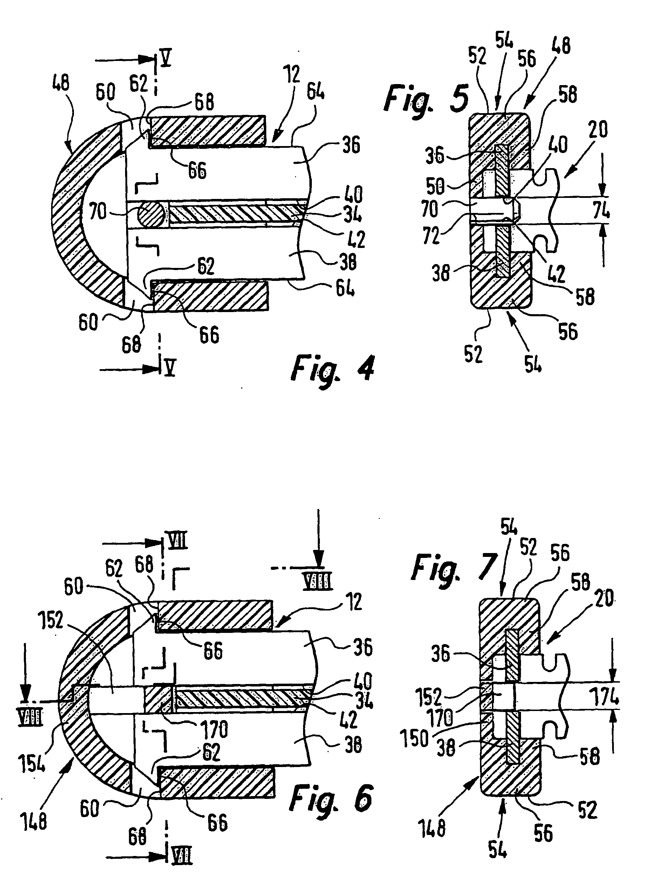

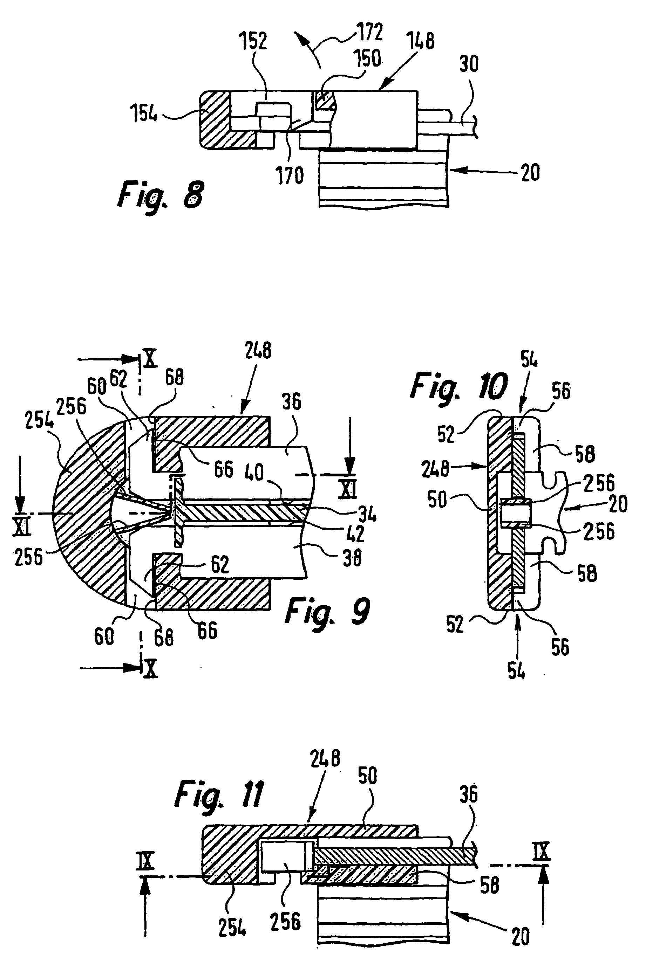

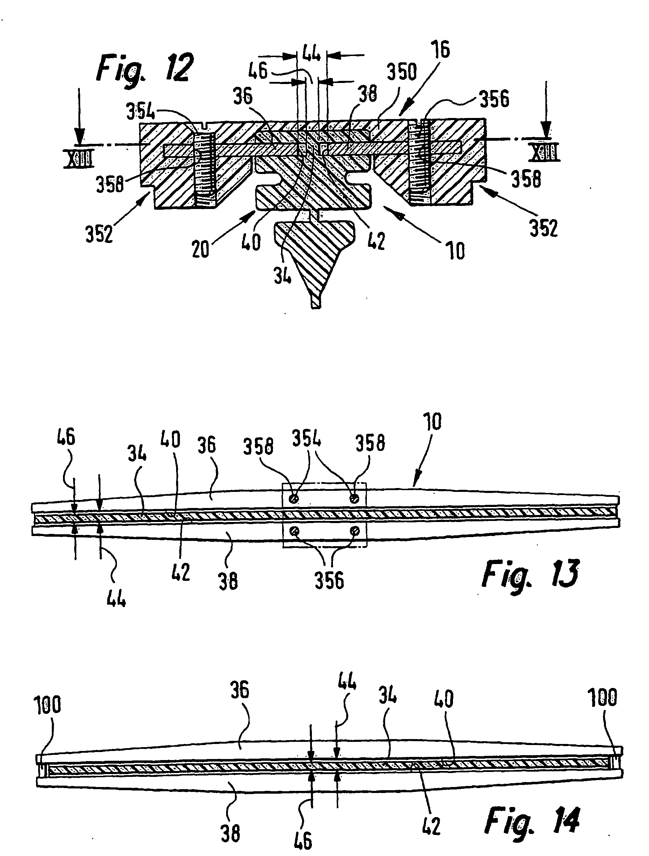

In der Zeichnung zeigen: Figur 1 eine Seitenansicht eines an einem Wischerarm angeordneten Wischblatts, Figur 2 eine in Figur 1 mit II bezeichnete Einzelheit, vergrößert dargestellt, Figur 3 die Schnittfläche eines Schnitts entlang der Linie III-III durch die Anordnung gemäß Figur 2, Figur 4 einen Schnitt entlang der Linie VI-VI durch die Einzelheit gemäß Figur 2, Figur 5 einen Schnitt durch die Anordnung gemäß Figur 4, entlang der Linie V-V, Figur 6 einen Schnitt gemäß Figur 4 durch eine andere Ausführungsform der Erfindung, Figur 7 einen Schnitt entlang der Linie VII-VII durch die Anordnung gemäß Figur 6, Figur 8 einen Schnitt entlang der Linie VIII-VIII durch die Anordnung gemäß Figur 6, Figur 9 einen Schnitt gemäß Figur 4 durch eine weitere Ausführungsform der Erfindung, Figur 10 einen Schnitt entlang der Linie X-X durch die Anordnung gemäß Figur 9, Figur 11 einen Schnitt entlang der Linie XI-XI durch die Anordnung gemäß Figur 9, Figur 12 die Schnittfläche eines Schnitts entlang der Linie XII-XII durch das Wischblatt gemäß Figur 1 in vergrößerter Darstellung, Figur 13 einen Längsschnitt entlang der Linie XIII-XIII durch die Wischleiste mit sichtbaren Federschienen und mit strichpunktiert angedeuteter Anschlußvorrichtung für den Wischerarm, verkleinert dargestellt und Figur 14 die Anordnung gemäß Figur 13 ohne die Anschlußvorrichtung, ein Ausführungsprinzip der Erfindung für die Ausführungen gemäß den Figuren 2 bis 11 darstellenden.

### Beschreibung der Ausführungsbeispiele

Ein Figur 1 dargestelltes Wischblatt 10 weist ein mehrteiliges, langgestrecktes, federelastisches Tragelement 12 auf. An der von der zu wischenden Scheibe 14 - in Figur 1 strichpunktiert dargestellt - abgewandten Oberseite des Tragelements 12 ist eine Anschlußvorrichtung 16 angeordnet, mit deren Hilfe das Wischblatt 10 mit einem an der Karosserie eines Kraftfahrzeugs geführten, angetriebenen Wischerarms 18 lösbar verbunden werden kann. An der der Scheibe zugewandten Unterseite des Tragelements 12 ist an diesem eine langgestreckte, gummielastische Wischleiste 20 längsachsenparallel angeordnet. Der Wischerarm 18 ist in Richtung eines Pfeiles 22 zur zu wischenden Scheibe 14 belastet, deren zu wischenden Oberfläche in Figur 1 mit der Bezugszahl 24 versehen ist. Da diese Oberfläche 24 die stärkste Krümmung der Scheibenoberfläche darstellen soll ist klar ersichtlich, daß die Krümmung des noch unbelasteten, mit seinen beiden Enden an der Scheibe 14 anliegenden Wischblatts 10 stärker ist als die maximale Scheibenkrümmung. Unter dem Anpressdruck (Pfeil 22) legt sich das Wischblatt 10 mit seiner Wischlippe 26 über seine gesamte Länge an der Scheibenoberfläche 24 an. Dabei baut sich im bandartigen, federelastisch Tragelement 12 eine Spannung auf, welche für eine ordnungsgemäße Anlage der Wischleiste 20 beziehungsweise der Wischlippe 26 über deren gesamte Länge an der Kraftfahrzeugscheibe 14 sorgt.

Im Folgenden soll nun auf die besondere Ausgestaltung des erfindungsgemäßen Wischblatts 10 näher eingegangen werden. Wie insbesondere die Figuren 2 und 3 zeigen ist die Wischleiste 20 des Wischblatts 10 mit zwei Längsnuten 28 und 30 versehen, die jeweils zu den Längsseiten der Wischleiste 20 hin randoffen sind. Beide Längsnuten 28 und 30 liegen in einer gemeinsamen Ebene - in Figur 3 strichpunktiert eingezeichnet - die sich bei auf die Scheibe 14 aufgesetztem Wischblatt 10 mit einem Abstand 33 von der Scheibe 14 befindet. Die Ausbildung der beiden Längsnuten 28 und 30 ist so getroffen, daß zwischen diesen ein Längs-Zwischensteg 34 verbleibt. In jeder der beiden Nuten 28 und 28 ist eine bandartig langgestreckte Federschiene 36 beziehungsweise 38 untergebracht. Die beiden Federschienen gehören zu dem Tragelement 12. Sie ragen mit ihren beiden von einander abgewandten Längsseiten aus ihren Längsnuten 28 und 30 heraus. Die Anordnung der beiden Federschienen 38 und 38 in ihren Längsnuten 28 und 30 ist so getroffen, daß sich ihre einander zugewandten Längskanten 40 und 42 mit einem Abstand 44 von einander befinden, der größer ist als die Breite 46 des Zwischenstegs 34. Wie Figur 3 weiter klar verdeutlicht befinden sich somit die inneren Längskanten 40 und 42 der Federschienen 38 und 38 mit einem gewissen Abstand vom Zwischensteg 34, so daß diese in ihren Längsnuten 28, 30 auch quer zu ihrer Längserstreckung verschiebbar sind.

Die bisher beschriebene Ausgestaltung des Wischblatts 10 findet sich bei allen im Folgenden beschriebenen, speziellen Ausführungsformen der Erfindung wieder. Wie Figur 4 einer ersten, speziellen Ausführungsform der Erfindung zeigt, ragen die beiden Federschienen 38 und 38 auch in Richtung ihrer Längserstreckung gesehen aus ihren Längsnuten 28 und 30 der Wischleiste 20. Damit die Federschienen 36, 38 in ihren Längsnuten 28 und 30 unverlierbar gehalten sind, sind auf die beiden Endabschnitte der Federschienen beziehungsweise auf den Endabschnitt des Tragelements 12 jeweils eine Endkappe 48 aufgebracht (Figuren 1 und 2). Wie insbesondere aus Figur 5 ersichtlich ist hat die Endkappe 48 eine Basisplatte 50, die sich bei montierter Endkappe auf der von der Wischlippe 26 abgewandten Seite der Federschienen 36, 38 befindet. Die Basisplatte 50 ist an ihren beiden Längsseiten 52 mit L-förmigen, sich in Längsrichtung der Federschienen 36, 38 erstreckenden Ansätzen 54 versehen, von denen jeweils der eine L-Schenkel 56 mit der Basisplatte 50 verbunden ist und sich die anderen L-Schenkel 58 aufeinander zu erstrecken. Wie Figur 5 weiter zeigt untergreifen die beiden anderen L-Schenkel 58 die Federschienen 36 und 38. Die Endkappen 48 halten somit in der in den Figuren 4 und 5 dargestellten Montageposition die Federschienen unverlierbar in den Längsnuten 28 und 30. Damit sich die Endkappen nicht unbeabsichtigt aus dieser Montageposition lösen können weisen ihre einen L-Schenkel 56 jeweils einen Durchbruch 60 auf, in welchen jeweils ein Vorsprung 62 einer jeden Federschiene 36, 38 greift der jeweils an den voneinander abgewandten äußeren Längskanten 64 der Federschienen 36, 38 angeordnet sind. An jedem der beiden Vorsprünge 62 ist eine zum anderen Endabschnitt des Wischblatts 10 weisende Schulter 66 ausgebildet, der eine mit dieser zusammen wirkende Gegenschulter am Durchbruch 60 der Endkappe 48 zugeordnet ist. Die Größe der Vorsprünge 62 ist dabei so bemessen, daß sie kleiner ist als die Differenz zwischen den beiden erwähnten Maßen 44 und 46, so daß ein problemloses Aufschieben der Endkappen 48 auf das Tragelement 12 ermöglicht wird. Damit die beiden Federschienen 36 und 38 nach der Montage der Endkappen 48 wieder in ihre vorschriftsmäßige Betriebsposition (Figur 3) gelangen und in dieser auch während des Wischbetriebs verbleiben, sind die Endkappen 48 jeweils mit einem separaten Zapfen 70 versehen, der nach der Montage der Endkappe 48 deren Basisplatte 50 in einer Bohrung 72 durchdringt und sich zwischen die einander zugewandten Längskanten 40 und 42 der Federschienen 36 und 38 erstreckt. Da sich die Bohrung 72 auf der Längsmittelachse des Wischblatts 10 befindet und der Zapfendurchmesser 74 größer ist als die Breite 46 des Zwischenstegs 34 ist sichergestellt, daß sich die einander zugewandten Längskanten 40, 42 der Federschienen 36, 38 stets mit Abstand vom Steg 34 befinden. Die Wischleiste 20 ist also gewissermaßen frei "schwimmend" zwischen den Federschienen 36, 38 aufgehängt und kann sich während des Wischbetriebs den jeweiligen Erfordernissen optimal anpassen. Dies gilt auch für die Federschienen der im folgenden beschriebenen Ausführungsformen der Erfindung.

Bei einer anderen, in den Figuren 6 bis 8 dargestellten Ausführungsform des erfindungsgemäßen Wischblatts gilt - mit Ausnahme der Bohrung 72 und des Zapfens 70 - alles was zur oben beschriebenen Ausführungsform gesagt worden ist. Deshalb werden auch in den Figuren 6 bis 8 für gleiche Ausgestaltungen auch die schon dort verwendeten Bezugszahlen verwendet. Abweichend davon ist jedoch die Endkappe 148 gemäß den Figuren 6 bis 8 aus einem elastischen Kunststoff hergestellt. In der Basisplatte 150 der Endkappe 148 ist eine Zunge 152 freigestellt, die mit einer den Längs-Endkanten der Federschienen 36, 38 zugewandten Endwand 154 der Endkappe 148 einstückig verbunden ist. Am freien Ende der Zunge 152 ist ein sich zwischen die einander zugewandten Längskanten 40, 42 der Federschienen 36, 38 erstreckender Zapfen 170 angeordnet. Die Zunge 152 ist in Richtung des Pfeiles 172 (Figur 8) entgegen einer sich aufbauenden, entgegen dem Pfeil 172 wirkenden Rückstellkraft aus seiner in Figur 8 dargestellten Betriebsstellung in eine Montageposition auslenkbar. In dieser Stellung gibt der Zapfen 170 die beiden Federschienen 36, 38 vollständig frei so daß ein Abziehen der Endkappe 148 ohne Schwierigkeiten möglich ist, weil nun die beiden Federschienen soweit aufeinander zubewegt werden können, daß die Schultern 66 nicht mehr mit den Gegenschultern 68 zusammen wirken können. Umgekehrt ist natürlich auch die Montage der Endkappe 148 auf die Federschienen 36, 38 problemlos möglich, weil dies bei entsprechend ausgelenktem Zapfen 170 geschieht, der erst nach Erreichen der vorschriftsmäßigen Montageposition der Endkappe 148 der Rückstellkraft folgend zwischen die einander zugewandten Längskanten 40 und 42 der Federschienen 36, 38 gelangt und damit auch das Zusammenwirken der Schultern 66 und 68 bewirkt. Durch eine entsprechende Anordnung des Zapfens 170 bezüglich der Längsmittelachse des Wischblatts und durch eine entsprechende Abstimmung der Breite 174 des Zapfens 170 wird erreicht, daß der bei montierter Endkappe 148 zwischen die einander zugewandten Längskanten 40, 42 der Federschienen 36, 38 eintauchende Zapfen 170 diese in einem Abstand 44 voneinander hält, der größer ist als die Breite 46 des Zwischenstegs 34 (Figur 3).

Bei der Erläuterung einer anhand der Figuren 9 bis 11 im folgenden zu erläuternden Ausführungsform des erfindungsgemäßen Wischblatts gilt hinsichtlich der Bezugszahlen das was schon in dieser Hinsicht zur Ausführungsform gemäß den Figuren 6 bis 8 gesagt worden ist. Auch bei dieser Ausführungsform ist die Endkappe 248 aus einem federelastischen Material vorzugsweise Kunststoff gefertigt. Anstelle der mit dem Zapfen 170 versehenen, freigestellten Federzunge 152 bei der Ausführungsform gemäß den Figuren 6 bis 8 sind an der Endwand 254 zwei gegen Federkraft auslenkbare, fingerartige Ansätze 256 angeordnet (Figur 9) die sich im wesentlichen in Längsrichtung des Wischblatts erstrecken und die bei auf den Federschienen 36, 38 montierten Endkappe 256 sich gespannt an den beiden einander zugewandten Längskanten 40, 42 anlegen. Dabei drücken sie die beiden Federschienen soweit auseinander, daß der Abstand 44 zwischen den einander zugewandten Längskanten 40, 42 der beiden Federschienen 36, 38 größer ist als die Breite 46 des Zwischenstegs 34. Die Abstimmung und Anordnung dieser Ansätze 256 ist so getroffen, daß auch hier die schon erwähnte vorschriftsmäßige Betriebsposition der Federschienen 36, 38 dauerhaft sichergestellt ist. Dabei hintergreifen auch hier die Schultern 66 der Vorsprünge 62 die an der Endkappe 248 ausgebildeten Gegenschultern 68. Der besondere Vorteil dieser Ausführungsform ist darin zu sehen, daß die Montage der Endkappen durch eine einzige, von Montageautomaten problemlos auszuführende geradlinige Aufsteckbewegung erreicht wird, die dann endet, wenn die Schultern 66 mit ihren Gegenschultern 68 zusammenwirken. Dann ist auch die vorschriftsmäßige Lage der Federschienen 36, 38 in ihren Längsnuten 28, 30 der Wischleiste 20 erreicht.

Schließlich wird nachfolgend noch anhand der Figuren 12 und 13 eine weitere Ausführungsform des erfindungsgemäßen Wischblatts erläutert. Bei dem in Figur 12 gezeigten Schnitt durch das Wischblatt 10 ist auch der Querschnitt der im Mittelabschnitt des Wischblatts angeordneten Anschlußvorrichtung 16 erkennbar. Abgesehen von den speziell ausgebildeten Mitteln durch welche die erforderliche Gelenkverbindung zwischen Wischerarm und Wischblatt erreicht wird ist der Querschnitt durch die Anschlußvorrichtung ähnlich den Querschnitten gemäß den Figuren 5, 7 und 10 durch die Endkappen 48 bzw. 148 bzw. 248. Die Anschlußvorrichtung 16 hat also ebenfalls eine Basisplatte 350 die mit krallenartigen Ansätzen 352 versehen ist, welche aus den Längsnuten 28 und 30 der Wischleiste 20 ragende Längsseitenbereiche der Federschienen 36, 38 untergreifen. Die Anschlußvorrichtung 16 ist so mit schlittenartig auf diese Federschienenbereiche aufschiebbar. Wie auch Figur 12 zeigt liegen die Federschienen 36, 38 so in ihren Längsnuten 28, 30 der Wischleiste 20, daß der Abstand 44 zwischen den einander zugewandten Längskanten 40, 42 der Federschienen 36, 38 größer ist als die Breite 46 des zwischen den Längsnuten 28, 30 verbleibenden Stegs 34. Diese vorschriftsmäßige Position der Federschienen 36, 38 bezüglich des Stegs 34 wird dadurch dauerhaft sichergestellt, daß an der Anschlußvorrichtung 16 entsprechende Sicherungsmittel angeordnet sind. Beim Ausführungsbeispiel sind diese beispielsweise durch Senkkopfschrauben 354 beziehungsweise durch Wurmschrauben 356 gebildet, welche die Federschienen 36, 38 in dort vorgesehenen Ausnehmungen 358 quer zu deren Längserstreckung durchdringen. Die Befestigung dieser Schrauben 354 beziehungsweise 356 erfolgt zweckmäßig in dem vorzugsweise aus einem Kunststoff gefertigten Anschlußvorrichtung 16. Abweichend von den beim Ausführungsbeispiel dargestellten Schrauben ist es denkbar diese entweder durch Paßstifte, Kerbstifte oder dergleichen zu ersetzen. Wie Figur 13 zeigt, sind für jede Federschiene zwei Schrauben vorgesehen.

Da die aus Figur 13 ersichtliche Draufsicht für alle hier beschriebenen Ausführungsformen des erfindungsgemäßen Wischblatts zutrifft ist ersichtlich, daß sowohl die Endkappen 48 bzw. 148 bzw. 248 bzw. die Anschlußvorrichtung 16 an sich einander gegenüber liegenden Abschnitten der Federschienen angeordnet sind welche aus den diesen zugeordneten Längsnuten ragen. Dies kann bei vollständig in ihren Längsnuten liegenden Federschienen auch dadurch erreicht werden, daß diese mit in Längserstreckung des Wischblatts 10 gesehen kurzen, einander paarweise gegenüberliegenden Abschnitten versehen sind, die aus den Längsnuten ragen und die Angriffsbereiche für die brückenartigen Bauteile bilden. Die Endkappen 48 bzw. 148 bzw. 248 bzw. die Anschlußvorrichtung 16 bilden somit brückenartige Bauteile, welche mit ihren Basisplatten 50 beziehungsweise 350 die Federschienen übergreifen und an den voneinander abgewandten Längskanten der Federschienen anliegen. Weiter ist klar ersichtlich, daß an jedem dieser vorerwähnten brückenartigen Bauteile zumindest ein Sicherungsmittel - Zapfen 70 beziehungsweise Zapfen 170 beziehungsweise Ansätze 256 beziehungsweise Schrauben 354, 356 - angeordnet sind, welche den vorschriftsmäßigen Abstand 44 gewährleisten der größer ist als die Breite 46 des Zwischenstegs 40. Bei den Ausführungsformen gemäß den Figuren 4 bis 11 tauchen die Mittel zum Sichern des vorschriftsmäßigen Abstandes 44 zwischen die einander zugewandten Längskanten 40, 42 der Federschienen 36, 38 so ein, daß sie an den Längskanten anliegen. Bei der Ausführungsform gemäß den Figuren 12 und 13 sind die Abstandssicherungsmittel 354 beziehungsweise 356 an der Anschlußvorrichtung 16 angeordnet und greifen in Ausnehmungen 358 der jeweiligen Federschiene 36, 38.

Figur 14 zeigt das Prinzip der Ausgestaltungen gemäß den Figuren 4 bis 11, wobei die Zapfen 70 beziehungsweise 170 beziehungsweise die Federansätze 256 durch Abstandshalter 100 gegenstandslos dargestellt sind.

Allen Ausführungsbeispielen ist gemeinsam, daß der Abstand 44 zwischen den einander zugewandten, inneren Längskanten 40 der beiden Federschienen 36, 38 größer ist als die Breite 46 des Zwischenstegs 34.

Es ist klar, daß die Ausführung gemäß den Figuren 12 und 13 problemlos mit einer der Ausführungen gemäß den Figuren 4 und 5 bzw. 6 bis 8 bzw. 9 bis 11 kombiniert werden kann. Darüberhinaus ist es denkbar, zwischen den Endkappen gemäß den Figuren 2 bis 11 - unabhängig von der Ausführung nach den Figuren 12 und 13 - weitere brückenartige Bauelemente anzuordnen, die ebenfalls mit Abstandssicherungsmittel versehen sein können. Dies empfiehlt sich insbesondere bei sehr langen Wischblättern.

## Patentansprüche

1. Wischblatt (10) für Scheiben von Kraftfahrzeugen mit einer bandartig langgestreckten, gummielastischen, mit einer Wischlippe an der Scheibe anlegbaren Wischleiste (20), die an ihren beiden Längsseiten mit einer in einer zur Scheibe (14) im wesentlichen parallelen und von dieser beabstandeten Ebene angeordneten Längsnut (28, 30) versehen ist, so dass zwischen den beiden Nuten ein Steg (34) verbleibt und in jeder Längsnut eine zu einem bandartig langgestreckten, federelastischen Tragelement (12) gehörende Federschiene (36, 38) untergebracht ist und der Abstand (44) zwischen den einander zugewandten Längskanten (40, 42) der beiden Federschienen (36, 38) größer ist als die Breite (46) des Stegs (34) und jede der beiden Federschienen (36, 38) zumindest mit einem Abschnitt aus seiner Längsnut (28, 30) ragt, wobei sich, bezogen auf eine Längsmittelachse der Wischleiste (20) diese Abschnitte gegenüberliegen und zumindest an einem dieser Abschnittspaare ein beide Federschienen brückenartig übergreifendes Bauteil (48, 148, 248, 350) an den von einander abgewandten Längskanten der Federschiene anliegt, **dadurch gekennzeichnet, dass** an dem Bauteil (48, 148, 248, 350) ein den Abstand (44) gewährleistendes Sicherungsmittel (70, 170, 256,354, 356) angeordnet ist.

2. Wischblatt nach Anspruch 1, **dadurch gekennzeichnet, dass** die beiden Federschienen (36, 38) an ihren beiden Endabschnitten sowohl in Längsrichtung als auch quer zur Längsrichtung der Wischleiste (20) aus ihren Nuten (28, 30) ragen, dass an diesen Endabschnitten je eine als brückenartiges Bauteil dienende Endkappe (48 beziehungsweise 148 beziehungsweise 248) angeordnet ist und dass an der Endkappe mit den einander zugewandten Längskanten (40, 42) der Federschienen (36, 38) zusammen wirkende Abstandssicherungsmittel (70 beziehungsweise 170 beziehungsweise 254) angeordnet sind.

3. Wischblatt nach Anspruch 2, **dadurch gekennzeichnet, dass** die Endkappe eine auf der von der Wischlippe (28) abgewandten Seite der Federschienen (36, 38) angeordnete Basisplatte (50) hat, die mit L-förmigen, sich in Längsrichtung der Federschienen erstreckenden Ansätzen (54) versehen ist, deren jeweils eine L-Schenkel (56) mit der Basisplatte (50) verbunden sind und deren jeweils andere L-Schenkel (58) gegeneinander gerichtet sind und dass an der Basisplatte zwischen die einander zugewandten Längskanten (40, 42) der Federschienen (36, 38) eintauchende, an diesen anliegende Abstandssicherungsmittel (70 beziehungsweise 170) angeordnet sind.

4. Wischblatt nach Anspruch 3, **dadurch gekennzeichnet, dass** die Abstandssicherungsmittel durch einen an der Basisplatte (50) gehaltenen Zapfen (70) gebildet sind.

5. Wischblatt nach Anspruch 4, **dadurch gekennzeichnet, dass** die Endkappe (148) aus einem federelastischen Material gefertigt ist und dass der Zapfen (170) an eine gegen eine Rückstellkraft aus einer Betriebsstellung in eine Montageposition auslenkbaren Zunge (152) der Endkappe angeordnet ist.

6. Wischblatt nach Anspruch 2, **dadurch gekennzeichnet, dass** die Endkappe (248) mit einer gegen die Längs-Endkanten der Federschienen (36, 38) gerichteten Wand (254) versehen, der in Längsrichtung der Federschienen zwischen diese eintauchende Abstandssicherungsmittel (256) angeordnet sind.

7. Wischblatt nach Anspruch 6, **dadurch gekennzeichnet, dass** die Endkappe aus einem federelastischen Material gefertigt ist und dass die Abstandssicherungsmittel durch zwei gegen Federkraft auslenkbare, fingerartige Ansätze (256) der Wand (254) gebildet sind, die in Betriebsstellung der Endkappe (248) gespannt an einer der beiden einander zugewandten Längskanten (40, 42) der Federschienen (36, 38) anliegen.

8. Wischblatt nach Anspruch 1, **dadurch gekennzeichnet, dass** das brückenartige Bauteil als eine im Mittelabschnitt des Wischblatts (10) auf der von der Wischlippe (26) abgewandten Seite der Federschienen (36, 38) angeordnete Anschlussvorrichtung (16) für einen Wischerarm (18) ausgebildet ist, die mit krallenartig die äußeren Längskanten der Federschienen umgreifenden Ansätzen (352) versehen ist und dass die Abstandssicherungsmittel durch an der Anschlussvorrichtung (16) angeordnete, in wenigstens eine Ausnehmung (358) der jeweiligen Federschiene greifende Mittel gebildet sind.

9. Wischblatt nach Anspruch 8, **dadurch gekennzeichnet, dass** die Mittel durch an der Anschlussvorrichtung (16) gehaltene, separate Bauelemente (354, 356) gebildet sind, welche die Federschienen (36, 38) in dort angeordneten Ausnehmungen (358) durchdringen.

10. Wischblatt nach einem der Ansprüche 2 bis 7, **dadurch gekennzeichnet, dass** an jedem Endabschnitt jeder Federschiene (36, 38) an deren voneinander abgewandten Längskanten eine zu ihrem anderen Endabschnitt weisende Schulter (66) angeordnet ist, der eine mit dieser zusammenwirkende Gegenschuher (68) der Endkappe (48, 148, 248) zugeordnet ist.

## Claims

1. Wiper blade (10) for glass surfaces of motor vehicles, having a rubber-elastic wiper strip (20) which is elongate in the manner of a band, can be placed with a wiper lip against the glass surface and is provided on its two longitudinal sides with a longitudinal groove (28, 30), which is arranged in a plane essentially parallel to the glass surface (14) and spaced apart therefrom, with the result that a web (34) remains between the two grooves, and a spring rail (36, 38) forming part of a spring-elastic supporting element (12), which is elongate in the manner of a band, is accommodated in each longitudinal groove, and the distance (44) between the mutually facing longitudinal edges (40, 42) of the two spring rails (36, 38) is greater than the width (46) of the web (34), and each of the two spring rails (36, 38) protrudes, at least by a section, out of its longitudinal groove (28, 30), these sections lying opposite each other, with respect to a longitudinal centre axis of the wiper strip (20), and, at least on one of these section pairs, a component (48, 148, 248, 350), which fits over the two spring rails in a bridge-like manner, bears against the mutually remote longitudinal edges of the spring rails, **characterized in that** a securing means (70, 170, 256, 354, 356) ensuring the spacing (44) is arranged on the component (48, 148, 248, 350).

2. Wiper blade according to Claim 1, **characterized in that** the two spring rails (36, 38) protrude at their two end sections out of their grooves (28, 30) both in the longitudinal direction and transversely to the longitudinal direction of the wiper strip (20), **in that** a respective end cap (48 or 148 or 248), which is used as a bridge-like component, is arranged on these end sections, and **in that** spacing-securing means (70 or 170 or 254) interacting with the mutually facing longitudinal edges (40, 42) of the spring rails (36, 38) are arranged on the end cap.

3. Wiper blade according to Claim 2, **characterized in that** the end cap has a base plate (50) which is arranged on that side of the spring rails (36, 38) which is remote from the wiper lip (28), and is provided with L-shaped lugs (54) which extend in the longitudinal direction of the spring rails and the one L limbs (56) of which are connected to the base plate (50) and the other L limbs (58) of which are directed towards one another, and **in that** spacing-securing means (70 or 170) which dip between the mutually facing longitudinal edges (40, 42) of the spring rails (36, 38) and bear against the latter are arranged on the base plate.

4. Wiper blade according to Claim 3, **characterized in that** the spacing-securing means are formed by a pin (70) held on the base plate (50).

5. Wiper blade according to Claim 4, **characterized in that** the end cap (148) is manufactured from a spring-elastic material, and **in that** the pin (170) is arranged on a tongue (152) of the end cap, which tongue can be deflected from an operational position into an installation position counter to a restoring force.

6. Wiper blade according to Claim 2, **characterized in that** the end cap (248) is provided with a wall (254) which is directed towards the longitudinal end edges of the spring rails (36, 38) and on which spacing-securing means (256) dipping between the spring rails in the longitudinal direction thereof are arranged.

7. Wiper blade according to Claim 6, **characterized in that** the end cap is manufactured from a spring-elastic material, and **in that** the spacing-securing means are formed by two finger-like lugs (256) of the wall (254), which lugs can be deflected counter to spring force and, in the operational position of the end cap (248), bear under tension against one of the two mutually facing longitudinal edges (40, 42) of the spring rails (36, 38).

8. Wiper blade according to Claim 1, **characterized in that** the bridge-like component is designed as a connecting device (16) for a wiper arm (18), which connecting device is arranged in the central section of the wiper blade (10) on that side of the spring rails (36, 38) which is remote from the wiper lip (26), and is provided with lugs (352) which fit in a claw-like manner around the outer longitudinal edges of the spring rails, and **in that** the spacing-securing means are formed by means which are arranged on the connecting device (16) and grip into at least one recess (358) of the respective spring rail.

9. Wiper blade according to Claim 8, **characterized in that** the means are formed by separate structural elements (354, 356) which are held on the connecting device (16) and penetrate the spring rails (36, 38) in recesses (358) arranged there.

10. Wiper blade according to one of Claims 2 to 7, **characterized in that** on each end section of each spring rail (36, 38), on their mutually remote longitudinal edges, there is arranged a shoulder (66) which points to the other end section of the said spring rail and which is assigned a mating shoulder (68), which interacts with it and belongs to the end cap (48, 148, 248).

## Revendications

1. Balai d'essuie-glace (10) de vitre de véhicule, comportant une lame d'essuyage (20), allongée, en forme de bande, ayant l'élasticité du caoutchouc et qui s'applique par une lèvre contre la vitre, cette lame étant munie au niveau de ses côtés longitudinaux, d'une rainure longitudinale (28, 30) principalement parallèle à la vitre (10) et située dans une plan écarté de la vitre de façon à laisser une entretoise (34) entre les deux rainures, et dont chaque rainure longitudinale reçoit un rail élastique (36, 38) faisant partie d'un élément de support (12) élastique, allongé en forme de bande, dans lequel
la distance d'écartement (44) entre les arêtes longitudinales (40, 42) en regard des deux rails élastiques (36, 38) est supérieure à la largeur (46) de l'entretoise (34) et chacun des deux rails élastiques (36, 38) déborde au moins par un segment de sa rainure longitudinale (28, 30), ces segments étant opposés par rapport à l'axe longitudinal médian de la lame d'essuyage (24), et une pièce (48, 148, 248, 350) chevauchant les deux rails élastiques s'applique contre l'une de ces paires de segments du côté opposé des arêtes longitudinales des rails élastiques,
**caractérisé en ce que**
la pièce (48, 148, 248, 350) comporte un moyen de sécurité (70, 170, 256, 354, 356) assurant l'écartement (44).

2. Balai d'essuie-glace selon la revendication 1,
**caractérisé en ce que**
les deux rails élastiques (36, 38) débordent de leur rainure (28, 30), au niveau des deux segments d'extrémité à la fois dans la direction longitudinale et dans la direction transversale à cette direction, ces segments d'extrémité comportant chacun un capuchon d'extrémité (48, 148, 248) servant de pièces en forme de pont, et
le capuchon d'extrémité comporte des moyens assurant l'écartement (70, 170, 254) coopérant avec les arêtes longitudinales en regard (40, 42) des rails élastiques (36, 38).

3. Balai d'essuie-glace selon la revendication 2,
**caractérisé en ce que**
les capuchons d'extrémité comportent une plaque de base (50) prévue sur le côté des rails élastiques (36, 38) à l'opposé de la lèvre d'essuyage (28), cette plaque de base ayant des prolongements (54) en forme de L s'étendant dans la direction longitudinale des rails élastiques, et dont une branche (56) de la forme en L est reliée à la plaque de base (54) et dont l'autre branche (58) de la forme de L est tournée vers celle de l'autre prolongement, et
entre les arêtes longitudinales (40, 42) en regard des rails élastiques (36, 38), la plaque de base comporte des moyens assurant l'écartement (70, 170) pénétrant entre les arêtes longitudinales.

4. Balai d'essuie-glace selon la revendication 3,
**caractérisé en ce que**
les moyens assurant l'écartement sont constitués par un téton (70) porté par la plaque de base (50).

5. Balai d'essuie-glace selon la revendication 4,
**caractérisé en ce que**
le capuchon d'extrémité (148) est fabriqué en une matière élastique et le téton (170) est prévu sur une languette (152) du capuchon d'extrémité qui peut être dégagée en agissant contre une force de rappel de sa position de fonctionnement à sa position de montage.

6. Balai d'essuie-glace selon la revendication 2,
**caractérisé en ce que**
le capuchon d'extrémité (248) comporte une paroi (254) dirigée vers les arêtes d'extrémité longitudinales des rails élastiques (36, 38), paroi munie de moyens assurant l'écartement (256) et pénétrant entre les rails élastiques dans la direction longitudinale de ceux-ci.

7. Balai d'essuie-glace selon la revendication 6,
**caractérisé en ce que**
le capuchon d'extrémité est fabriqué en une matière élastique et le moyen assurant l'écartement est formé par deux prolongements (256) en forme de doigt de la paroi (254) qui se déforment contre la force élastique et qui lorsque le capuchon d'extrémité (248) est en position de fonctionnement, s'appliquent sous contrainte contre l'une des deux arêtes longitudinales (40, 42) en regard des rails élastiques (36, 38).

8. Balai d'essuie-glace selon la revendication 1,
**caractérisé en ce que**
la pièce en forme de pont est réalisée comme un dispositif de raccordement (16) d'un bras d'essuie-glace (18) prévu dans le segment central du balai d'essuie-glace (10) du côté des rails élastiques (36, 38) à l'opposé de celui de la lèvre d'essuyage (26), ce dispositif de fermeture étant muni de prolongements (352) en forme de griffes entourant les arêtes longitudinales externes des rails élastiques, et
les moyens assurant l'écartement sont constitués par des moyens prévus sur le dispositif de raccordement (16) et qui pénètrent dans au moins une cavité (358) du rail élastique respectif.

9. Balai d'essuie-glace selon la revendication 8,
**caractérisé en ce que**
les moyens sont formés par des composants (354, 359), séparés, tenus par le dispositif de raccordement (16), et qui traversent les rails élastiques (36, 38) dans des orifices (358) correspondants.

10. Balai d'essuie-glace selon l'une quelconque des revendications 2 à 7,
**caractérisé en ce qu'**
à chaque segment d'extrémité d'un rail élastique (36, 38) les arêtes longitudinales opposées comportent un épaulement (70) tourné vers l'autre segment d'extrémité et auquel est associé un épaulement complémentaire (68) du capuchon d'extrémité (48, 148, 248) pour coopérer avec celui-ci.
